## Europäisches Patentamt
## European Patent Office
## ·Office européen des brevets

(19)

(11) Veröffentlichungsnummer: **0 088 390**
**B1**

(12) # EUROPÄISCHE PATENTSCHRIFT

(45) Veröffentlichungstag der Patentschrift:
**16.07.86**

(51) Int. Cl.⁴: **H 01 H 35/42,** H 01 H 61/02

(21) Anmeldenummer: **83102116.7**

(22) Anmeldetag: **04.03.83**

(54) **Schutzeinrichtung in elektrisch betriebenen Geräten.**

(30) Priorität: **06.03.82 DE 3208147**
**24.09.82 DE 3235366**

(43) Veröffentlichungstag der Anmeldung:
**14.09.83 Patentblatt 83/37**

(45) Bekanntmachung des Hinweises auf die Patenterteilung:
**16.07.86 Patentblatt 86/29**

(84) Benannte Vertragsstaaten:
**AT BE CH FR GB IT LI NL SE**

(56) Entgegenhaltungen:
**EP - A - 0 001 831**
**DE - A - 2 631 785**
**DE - A - 2 725 652**
**US - A - 3 770 002**
**US - A - 4 124 835**

(73) Patentinhaber: **Gaus, Harry, Schwanheimer Strasse 93,**
**D-6140 Bensheim (DE)**

(72) Erfinder: **Gaus, Harry, Dr., Schwanheimer Strasse 93,**
**Bensheim (DE)**
Erfinder: **Gross, Hagen, Am Zollstock 29, Bad Homburg**
**(DE)**

ACTORUM AG

**Beschreibung**

Die Erfindung betrifft eine Schutzeinrichtung in aus einem Starkstromnetz betriebenen elektrischen Geräten gemäss dem Oberbegriff des Anspruchs 1, die den Gerätebenutzer vor einem elektrischen Schlag schützen kann.

Geräte dieser Art sind z.B. tragbare Haartrockner, tragbare Heizlüfter, Bestrahlungslampen, Rasierapparate u. dgl. Eine besondere Gefahr bei der Benutzung tritt dann auf, wenn ein solches Gerät mit Wasser in Berührung kommt. So kann es z.B. im Badezimmer zu einem tödlichen Unfall kommen, wenn ein Haartrockner oder Heizlüfter, auch wenn er nicht in Betrieb ist, ins Wasser fällt.

Nach dem Stand der Technik sind Schutzeinrichtungen verschiedenster Art bekannt, die bei einem Kontakt stromführender elektrischer Bauteile eines Gerätes mit Feuchtigkeit eine sofortige Abschaltung der Stromzufuhr bewirken und dadurch einen elektrischen Schlag verhindern sollen.

Bei einer ersten Gruppe von Vorschlägen soll diese Abschaltung über externe, d.h. ausserhalb des Gerätes in der Netzleitung des Gebäudes liegende Fehlerstrom-Schutzschalter, über Schaltrelais oder einfach über die Netzsicherung erfolgen. So ist in der EP-A-1831 ein Haartrockner beschrieben, bei dem im Gerätegehäuse ein offener Doppelleiter als Sonde untergebracht ist, die beim Eindringen von Feuchtigkeit ihren elektrischen Impedanzwert ändert und über eine ausserhalb des Gerätegehäuses, z.B. im Netzstecker, untergebrachte elektronische Schaltung ein elektromagnetisches Schaltrelais, das mit zwei Arbeitskontakten die Netzzuleitung doppelpolig zum Gerät durchschaltet, abfallen lässt. Für diese bekannte Schutzeinrichtung sind Spezialnetzkabel, Spezialnetzstecker und ein erheblicher Aufwand für die elektronische Ansteuerung des Schaltrelais erforderlich, sowie besondere Massnahmen, um ein erneutes Anziehen des Schaltrelais und Durchschalten der Netzspannung zu verhindern, bevor die Störung behoben ist.

Bei einer zweiten Gruppe von Vorschlägen ist die Schutzeinrichtung voll in das zu schützende Gerät integriert.

So wurde z.B. vorgeschlagen, über die Netzleitungen eines Elektrogerätes einen Triac zu schalten, dessen drei Elektroden im Inneren des Gerätes frei zugänglich sind. Bei einem Eintauchen des Gerätes ins Wasser erhält die Zündelektrode je nach Einbauverhältnissen und Phasenlage des Netzes einen Zündstrom von Erde oder einer der Hauptelektroden her, so dass der Triac zündet und die Netzleitungen kurzschliessen kann. Dabei löst die Netzsicherung aus und schaltet das Gerät spannungsfrei.

Dies verstösst jedoch gegen internationale Richtlinien, die einen gewollten Kurzschluss zur Geräteabschaltung nicht gestatten. Zur einwandfreien Funktion der Einrichtung müssten eine korrekte Hausinstallation und -absicherung sowie eine hinreichend niedrige Netzimpedanz vorausgesetzt werden. Auch gibt es 220-V-Netze mit zwei abgesicherten Aussenleitern, von denen in der Regel nur einer durch Ansprechen einer Sicherung abgeschaltet würde. In jedem Falle läuft die Abschaltung zeitgleich mit dem Unfall ab, d.h. die Elektrisierung des Benutzers wird zeitlich je nach den Netzeigenschaften begrenzt, jedoch nicht ganz verhindert, denn eine direkte Verbindung Wasser–Netz ist Voraussetzung für das Einleiten des Kurzschlusses.

Der Erfindung liegt die Aufgabe zugrunde, eine Schutzeinrichtung dieser zweiten Gruppe zu schaffen, die unabhängig von der Polung am Netz und von dem Betriebszustand des Gerätes in kürzester Zeit anspricht und so den Benutzer vor einem elektrischen Schlag schützt und deren elektronische und mechanische Bauteile an Zahl und Grösse eine Miniaturisierung in einem kompakten Bauteil ermöglichen, das in herkömmlichen elektrisch betriebenen Kleingeräten untergebracht werden kann. Seiner allgemeinen Einführung darf nicht ein zu hoher Preis entgegenstehen.

Diese Aufgabe wird erfindungsgemäss durch eine Kombination von Bauteilen mit den Merkmalen des Anspruchs 1 gelöst.

Eine Sonde in Form eines Doppelleiters ist an sich aus einer Schutzeinrichtung der ersten Gruppe bekannt (EP-A-1831). Selbstöffnende mechanische Schalter, deren Kontakte durch einen bei Erhitzen schmelzenden Werkstoff geschlossen gehalten werden, sind in verschiedenen Ausführungen bekannt. Ihr Zweck ist z.B., als Grenztemperaturschalter (sog. Thermo-Pillen) die Stromzufuhr abzuschalten, sobald in einem Gerätegehäuse eine unzulässig hohe Temperatur oder ein Masseschluss (US-A-3 629 766) auftritt, oder als fernschaltbare Schmelzsicherung eine Stromleitung zu unterbrechen (US-A 4 124 835), aber nicht der Schutz eines Benutzers vor einem Elektroschock; dazu sprechen sie zu träge an.

Mit der erfindungsgemässen Kombination wird eine Schutzeinrichtung geschaffen, die beim Eindringen von z.B. Wasser in das Gerätegehäuse die Netzspannung im Gerät selbst zuverlässig innerhalb kürzester Frist allpolig abschaltet, bevor der Benutzer über das eindringende Wasser mit spannungsführenden offenen Teilen in Verbindung kommen kann, wobei die Abschaltung durch die Bauart des verwendeten Schalters irreversibel ist und ein durchnässtes Gerät nicht sogleich wieder in Betrieb genommen werden kann. Gegenüber einem abfallverzögerten Haltestromrelais spricht ein thermisch auslösbarer Schalter äusserst trägheitsarm an. Die Gefahr eines Verklemmens oder ungewollten Auslösens durch Stoss ist praktisch ausgeschlossen; die zu einer Stossauslösung notwendigen Beschleunigungen liegen in einer Grössenordnung von 1000 g.

Eine durch ihren geringen Aufwand besonders vorteilhafte Ausführung der Zündschaltung ist im Patentanspruch 2 gekennzeichnet. Sobald sich durch eindringendes Wasser der Impedanzwert der Sonde ändert, zündet der Thyristor, und durch das Widerstandselement fliesst ein Strom, der es in Bruchteilen einer Sekunde auf die erforderliche Schmelztemperatur aufheizt, so dass die unter Vorspannung stehenden Kontakte des Schutzschalters aufspringen und das gesamte Gerät spannungsfrei schalten.

Eine auch aus der EP-A-1831 bekannte eigensichere Ausführung ergibt sich dann, wenn die Zündschaltung im Netzstromkreis des Gerätes derart zwischen Schutzschalter und Last angeordnet ist, dass bei geöffnetem Schalter ihre sämtlichen Bauelemente spannungsfrei geschaltet sind.

Für die Konstruktion des Schutzschalters der Schutzeinrichtung bieten sich verschiedene Möglichkeiten je nachdem, ob man einen elektrisch leitenden oder nicht leitenden schmelzbaren Werkstoff wählt.

In einer ersten Ausführungsform mit den kennzeichnenden Merkmalen des Patentanspruchs 3 ist dieser Werkstoff wie bekannt ein Schmelzdraht, der beim Zünden des Halbleiterschalters der Zündschaltung von einem Strom durchflossen wird.

Bei Geräten mit geringer Nennleistung kann man mit einem einpoligen Schutzschalter auskommen, wenn man den Schmelzdraht in eine der Netzleitungen, den Kontaktfedersatz in die andere Netzleitung legt und wenn man den Halbleiterschalter der Zündschaltung auf der Geräteseite über beide Netzleitungen schaltet. – Bei Geräten mit grösserer Nennleistung befindet sich bevorzugt in jeder Netzleitung je ein Kontaktfederpaar eines zweipoligen Schutzschalters.

Ein gewisser Nachteil der einpoligen Ausführungsform des Schutzschalters besteht darin, dass der Schmelzdraht direkt aus der geringen Quellimpedanz des Netzes gespeist wird, so dass der ihn durchfliessende Strom bis zum Erreichen des Schmelzintegrals $I^2.t$ einen hohen Wert angenommen haben kann. Dieser Strom addiert sich zum Verbraucherlaststrom, der mechanische Schutzschalter muss also einen relativ grossen Gesamtstrom abschalten können.

In einer zweiten Ausführungsform, deren Merkmale in den Patentansprüchen 4 bis 8 gekennzeichnet sind, wird ein nicht leitender Werkstoff, insbesondere ein Klebstoff verwendet.

Im folgenden wird die Erfindung an einigen Ausführungsbeispielen näher erläutert. In der Zeichnung zeigen

Fig. 1 eine Zündschaltung mit einem Thyristor als Halbleiterschalter,

Fig. 2 die Anordnung eines elektrischen Doppelleiters als Sonde für eingedrungenes Wasser, vom Gehäuseinneren eines Haartrockners gegen dessen Luftaustrittsöffnung gesehen und in perspektivischer Darstellung

Fig. 3 einen einpoligen Schutzschalter mit Schmelzdraht-Zuhaltung seines Kontaktfederpaares,

Fig. 4 einen Schutzschalter gem. Fig. 3 in zweipoliger Ausführung,

Fig. 5 einen Schutzschalter mit zylindrischem Widerstandselement und Klebung und

Fig. 6 einen solchen Schutzschalter mit einem flachen Dickfilmwiderstand,

Fig. 7 die Anordnung der Schutzeinrichtung im Handgriff eines Elektrogerätes.

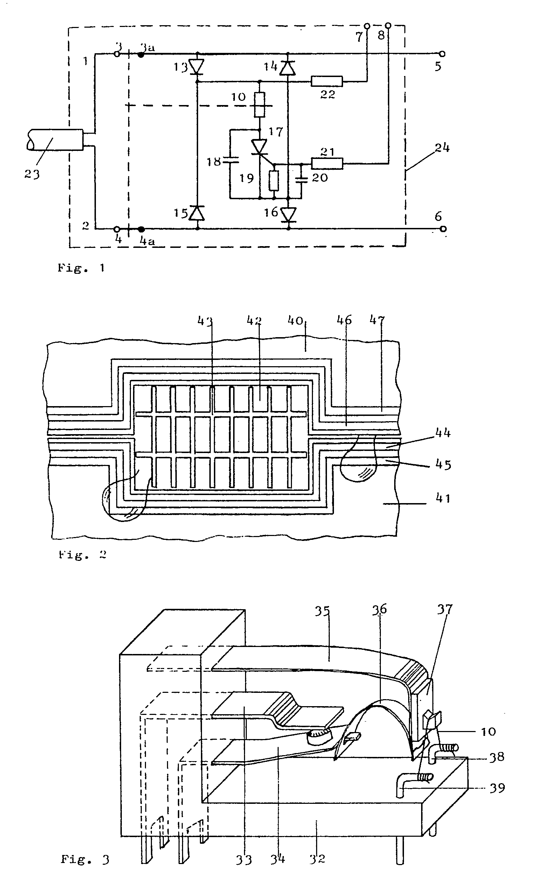

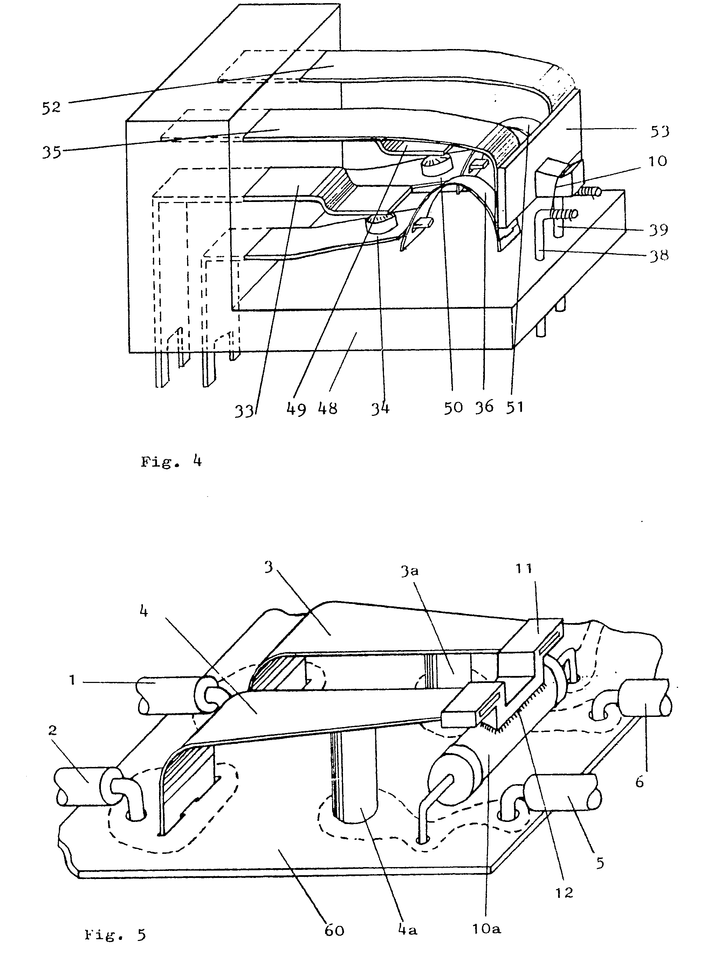

In Fig. 1 ist der Stromlaufplan einer Schutzeinrichtung dargestellt. Von den Klemmen 1, 2, an die die Adern der Netzzuleitung 23 angeschlossen sind, führen die geräteinternen Netzleitungen über die Kontaktfedern 3, 4 eines zweipoligen Schutzschalters (Fig. 4 bis Fig. 6) zu den Klemmen 5, 6, an die die Verbraucherlast des Gerätes angeschlossen ist. Die Kontaktfedern 3, 4 sind mit einem Widerstandselement 10 mechanisch verbunden, das in Reihe mit einem Thyristor 17 eine Diagonale eines Diodenquartetts 13, 14, 15, 16 bildet. Der parallel zum Thyristor 17 geschaltete Kondensator 18 bildet einen Schutz gegen dessen Über-Kopf-Zündung bei Netzstörungen. Die R-C-Beschaltung 19, 20 verhindert ungewollte Zündungen über die Steuerelektrode des Thyristors, die über einen hochohmigen Schutzwiderstand 21 an die eine Klemme 8 der (nicht dargestellten) Doppelleitung einer Sonde (Fig. 2) geführt ist. Der andere Anschluss 7 der Doppelleitung führt über einen entsprechenden Schutzwiderstand 22 an das freie Ende des Widerstandes 10.

Sobald die Impedanz der Sonde durch einen Wassereinbruch stark abfällt, zündet der Thyristor 17. Als Thyristor ist der kleinste handelsübliche Typ mit 0,5 A/400 V verwendbar, der eine hochempfindliche Steuerelektrode mit max. 0,2 mA Zündstrom besitzt. Die hochohmigen Schutzwiderstände 21, 22 von z.B. 120 kΩ begrenzen den Ableitstrom im Augenblick der Zündung auf ungefährliche Werte von z.B. 1,8 mA.

Fig. 2 zeigt die Anordnung des elektrischen Doppelleiters der Sonde für eingedrungenes Wasser, vereinfacht dargestellt mit Blick vom Gehäuseinneren z.B. eines Haartrockners gegen dessen Luftaustrittsöffnung. Die beiden Gehäuseschalen 40, 41 bilden miteinander eine Gehäusefuge sowie die Austrittsöffnung 42, in die ein Berührungsschutzgitter 43 eingefügt ist. Um diese Öffnung herum sowie längs der Gehäusefuge sind elektrisch leitende Streifen 44, 45 und 46, 47 angebracht. Sie lassen sich durch Aufdrucken mit Leitlacken oder Aufspritzen in einem Zweiphasen-Spritzgussverfahren auf die Innenflächen der beiden Gehäuseschalen 40, 41 aufbringen. Diese Streifen können bei normaler Handhabung des Gerätes nicht berührt werden und sind von den Gehäusekanten so weit zurückgesetzt, dass sie die vorgeschriebenen Luft- und Kriechwege einhalten. Durch passende Anordnung kann sichergestellt werden, dass ein elektrischer Kontakt von einem spannungführenden Geräteinnenteil nach aussen durch in die Öffnung oder den Gehäusespalt eindringendes Wasser nicht hergestellt werden kann, ohne die Streifen zu benetzen. Durch eingedrungenes Wasser wird die Leitfähigkeit zwischen den Streifen stark heraufgesetzt mit der Folge, dass – wie beschrieben –

der Thyristor der Zündschaltung (Fig. 1) zündet.

Fig. 3 zeigt einen einpoligen selbstöffnenden mechanischen Schalter, der durch einen Schmelzdraht freigegeben werden kann. In einem Kunststoffsockel 32 sind eine starre Kontaktfeder 33 sowie eine bewegliche Kontaktfeder 34 und ein Federbügel 35 eingegossen. Zusammen mit der Sprungfeder 36 bilden diese Teile einen an sich bekannten sogenannten Sprungfederkontakt. Er schliesst sich, sobald der Federbügel niedergedrückt wird, und öffnet sich, sobald der Federbügel nach oben freigegeben ist. Ein selbsttätiges Öffnen setzt voraus, dass der Federbügel 35 so vorgespannt ist, dass er eine obere Ruhelage einnimmt. Am vorderen Ende des Federbügels ist ein Kunststoffanker 37 aufgespritzt, über den ein Schmelzdraht 10 gelegt und an den beiden Stiften 38, 39 durch Drahtwickeltechnik befestigt ist.

Bei diesem Schalter wird die eine Netzleitung über die beiden Stifte 38, 39 und den Schmelzdraht 10 und die andere Netzleitung über die beiden Federn 33, 34 geführt. Der Schmelzdraht 10 muss so dimensioniert sein, dass er den Nennstrom des Gerätes ohne die Gefahr eines ungewollten Auslösens führen kann. Als Material ist besonders gut Phosphorbronze geeignet, da sie eine hohe Zugfestigkeit mit einem relativ niedrigen Schmelzpunkt verbindet.

Die Leistungsfähigkeit des Schutzschalters lässt sich an einem Dimensionierungsbeispiel belegen.

Für ein Gerät mit einem Nennstrom unter 0,1 A, z.B. einen Elektrorasierer, könnte ein Schmelzdraht von 0,04 mm ⌀ Verwendung finden, der eine Zugfestigkeit von 1,2 N besitzt. Der auslösende Strom beträgt etwa 0,25 A, so dass selbst bei der ungünstigen Annahme einer Zündung im Nulldurchgang der Netzspannung eine Schmelzzeit von nur ca. 0,2 mSek. zu erwarten ist.

Die Anordnung des Schmelzdrahtes nach Fig. 3 erhöht seine Belastbarkeit auf 2×1,2 N und erlaubt, den Federbügel 35 so auszulegen, dass er mit einer Kraft von 1N den Schalter zu öffnen sucht. Die von der Bügelfeder zu beschleunigende Masse beträgt etwa 0,3 g, so dass eine Öffnungsbeschleunigung von ca. 330 g auftritt. Die Zeit vom Auslösen der Zündschaltung bis zum vollständigen Öffnen des Schalters beträgt dann ca. 1,3 mSek. Mit anderen selbsttätig arbeitenden Schalterausführungen, z.B. dem an sich bekannten elektromagnetisch ausgelösten Schalter, sind so kurze Auslösezeiten kaum zu erreichen, da das Verhältnis von beschleunigender Kraft zu bewegter Masse bei elektromagnetischen Systemen stets kleiner ist als bei diesem mit reinen Federkräften arbeitenden System.

Durch eine geeignete Verlegung des elektrischen Doppelleiters der Sonde kann erreicht werden, dass die Zündschaltung angesprochen hat, bevor noch eindringendes Wasser andere unter Spannung stehende Teile des Elektrogerätes, z.B. die Heizwendel eines Haartrockners, erreicht hat. Fällt ein Haartrockner z.B. in eine Badewanne, so kann seine Fallgeschwindigkeit wenige Meter pro Sek. nicht übersteigen, d.h. die Eindringgeschwindigkeit des Wassers kann max. einige Millimeter pro mSek. erreichen. Bei einer angegebenen Auslösegeschwindigkeit von 1,3 mSek. für den Schutzschalter ist damit ein Mindestabstand zwischen dem elektrischen Doppelleiter und spannungsführenden Teilen des Gerätes von 10 mm zu fordern.

Fig. 4 zeigt einen zweipoligen Schutzschalter gleicher Konstruktion mit je einem Sprungfederkontakt für jede der beiden elektrischen Leitungen (vgl. Fig. 1). Auf einem Kunststoffsockel 48 befinden sich ein erster Kontaktsatz, bestehend aus den Teilen 33, 34, 35 und 36, und ein zweiter Kontaktsatz, bestehend aus den Teilen 49, 50, 51 und 52. An der Stirnseite der beiden Federbügel 35 und 52 und diese verbindend ist eine Ankerplatte 53 aus Kunststoff aufgespritzt. Im Normalzustand wird die Ankerplatte 53 wieder durch den Schmelzdraht 10, der um die Stifte 38 und 39 gewickelt ist, in einer unteren Stellung gehalten, so dass beide Schalter geschlossen sind. Der Schmelzdraht 10 kann nun, da er den Gerätestrom nicht führt, unabhängig dimensioniert werden, und es sind Alterungserscheinungen durch ständige thermische Beanspruchung ausgeschlossen. Dieser Schutzschalter kann, wie leicht ersichtlich, direkt in einer Zündschaltung nach Fig. 1 eingesetzt werden.

Fig. 5 zeigt eine weitere Ausführung eines zweipoligen Schutzschalters mit auf einen Widerstand aufgeklebten Kontaktfedern. Auf einer Leiterplatte 60 sind zwei gebogene Kontaktfedern 3 und 4 befestigt, die an ihren freien Enden mit einem Joch 11 aus Kunststoff miteinander verbunden sind. Im herabgebogenen Zustand geben diese Federn Kontakt mit in die Leiterplatte 60 eingesetzten Kontaktstiften 3a, 4a, und das Joch 11 ist auf einen Widerstand 10a mit einem Klebstoff 12 aufgeklebt. Sobald die (nicht dargestellte) Sonde Gefahr durch Wassereinbruch registriert, wird der Widerstand 10a, wie in Verbindung mit Fig. 1 beschrieben, an das Netz geschaltet. Widerstandswert und Wärmekapazität des Widerstandes 10a lassen sich so aufeinander abstimmen, dass innerhalb von 0,5 bis 2 mSek. (je nach Phasenlage) eine Temperatur erreicht ist (ca. 200°C), die zum Versagen der Klebstelle führt, so dass die Kontaktfedern 3, 4 aufspringen und die Netzleitungen von den Klemmen 1, 2 zu den Klemmen 5, 6 (Fig. 1) unterbrechen. Durch das günstige Kraft-Masse-Verhältnis der Kontaktfedern 3, 4 ist der Schalter geöffnet, noch bevor der Widerstand 10a durchbrennen kann.

In einem Versuchsaufbau wurde ein handelsüblicher Drahtwiderstand von 330 Ohm in den Abmessungen 2 mm ⌀·6 mm mit einem Wickelkern aus Glasfasern und offenliegender einlagiger Drahtwicklung verwendet. Die Wicklung wurde mit einem Schmelzkleber, z.B. einem Cyan-Acrylat-Kleber oder einem Polyamidkleber dünn beschichtet.

Das Joch 11 stellt sicher, dass ungeachtet von möglichen Ungleichmässigkeiten des Klebstoffes nach einer Auslösung stets beide Kontaktfe-

dern zugleich nach oben schwingen und zwangsweise beide Kontaktstellen öffnen. Um die Öffnungsgeschwindigkeit möglichst gross zu halten, ist das Joch soweit wie möglich erleichtert. Auch soll durch Material und Formgebung verhindert werden, dass Verlustwärme, die bei starker Strombelastung der Kontaktstellen 3/3a, 4/4a entsteht, auf die Klebstelle 12 übertragen wird. Die verjüngte Form der Kontaktfedern 3, 4 soll durch Verringerung der Masse ebenfalls eine höhere Öffnungsgeschwindigkeit erbringen. An dem Muster ergeben sich folgende Daten: Nach dem Zünden des Halbleiterschalters wurde ein Strom von 0,67 A im Mittel aufgenommen, der klein ist im Verhältnis zum Nennstrom eines 1500-Watt-Haartrockners von 6,8 A. Die an dem Widerstand 10a anfallende Leistung von 146 W im Mittelwert bzw. 290 W als Spitzenwert erwärmt diesen je nach Phasenlage zu Beginn der Auslösung in ca. 1 bis 3 Millisekunden auf die Schmelztemperatur von ca. 120°C, so dass sich die Klebstelle löst. Die Kontaktfedern 3, 4 standen unter einer Anfangskraft von etwa 1,2 N, die effektive Masse betrug 80 mg. Daraus resultiert eine Anfangsbeschleunigung von 1500 g und eine Öffnungszeit für 3 mm Kontaktabstand von etwa 1 Millisekunde. Während dieser Zeit kann die Temperatur des Widerstandes 10a weiter steigen, jedoch nicht auf Werte, die zum Durchbrennen führen, da hierfür eine um Faktoren längere Zeit nötig wäre.

Eine weitere Verkürzung der Abschaltzeit ist durch Verwendung eines Dickfilmwiderstandes, bestehend aus einer dünnen, homogenen Widerstandsschicht auf Metalloxydbasis auf einem ebenen Keramikplättchen möglich, da das Verhältnis von möglicher Impulsleistung zu der Wärmekapazität von Widerstands- und Klebstoffschicht günstiger ist.

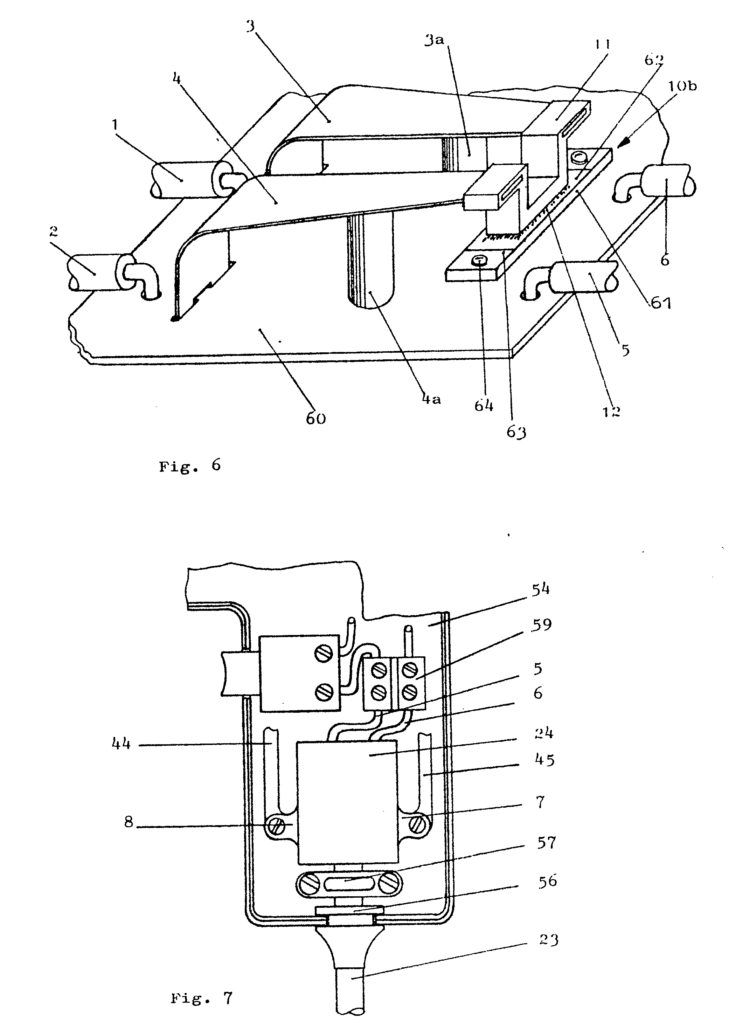

Fig. 6 zeigt entsprechend Fig. 5 eine solche Ausführung des Schutzschalters; gleiche Teile tragen gleiche Bezugszeichen. Der Wiederstand 10b besteht aus einem ebenen Keramikplättchen 61 mit einer dünnen homogenen Widerstandsschicht 62 und zwei metallisierten Anschlussflächen 63 mit Anschlüssen 64. Solche Widerstandselemente sind z.B. aus der Potentiometertechnik bekannt. – Diese Ausführung hat den für Herstellung und Funktionssicherheit bedeutenden Vorteil, dass zwischen dem Joch 11 und der Widerstandsschicht 62 eine ebene und angenähert planparallele Klebfuge gebildet ist, so dass die Qualität der Verklebung sehr gleichmässig ausfällt. Kleine Verschiebungen zwischen den zu verklebenden Teilen in horizontaler Richtung infolge von mechanischen Toleranzen sind unschädlich.

Die Schutzschalter nach den Fig. 3 bis 5 können besonders klein aufgebaut werden; der Massstab in der Zeichnung ist etwa 5:1. Auf der Leiterplatte 60 (Fig. 5) können die elektronischen Bauelemente der Zündschaltung (Fig. 1) untergebracht werden.

Wegen der Kleinheit dieser Teile und der geringen Bauelementezahl in der Elektronik ist es möglich, die gesamte Schutzeinrichtung als mechanische Einheit mit dem Netzkabel aufzubauen.

Fig. 7 zeigt eine beispielhafte Ausführung mit einem Netzkabel 23, einer Durchführungstülle 56, der Kabelklemme 57 und einem hermetisch dichten Gehäuse 24 für die Zündschaltung samt Schutzschalter, das in Fig. 1 gestrichelt angedeutet ist. Aus dem Gehäuse 24 sind die beiden geräteseitigen Netzleitungen 5, 6 zu der Lüsterklemme 59 und seitlich – z.B. als Fortsätze der in Fig. 5 dargestellten Leiterplatte 60 – die Anschlüsse 7, 8 herausgeführt und mit dem im Gehäuse 24 verlegten, z.B. aufgedruckten Doppelleiter 44, 45 durch Verschraubung verbunden. – Nach einem Auslösen des Schutzschalters im Störungsfalle kann die Funktionsfähigkeit des Gerätes wieder hergestellt werden, indem das Netzkabel 23 samt Gehäuse 24 ausgetauscht wird. Sollen in der Serienfertigung Geräte sowohl mit als auch ohne Schutzeinrichtung gefertigt werden, so kann das Netzkabel 23 auch unmittelbar an die Lüsterklemme 59 angeklemmt werden.

Die Vorteile der erfindungsgemässen Schutzeinrichtung bestehen in ihren äusserst geringen Herstellkosten, der grossen Funktionssicherheit wegen des Fehlens mechanisch komplizierter Zusammenhänge und der geringen Bauteilezahl sowie der Sicherheit gegen ungewollte Auslösung, die durch die Entkopplung des Thyristors 17 durch das Widerstandselement 10 gegeben ist, wodurch ein Schutzkondensator 18 erst wirksam werden kann.

Ferner ist der Schutzschalter in seinen verschiedenen Ausführungen unempfindlich gegen Schock und Vibration bis über 1000 g, da das Verhältnis von rückhaltender Kraft (Schmelzdraht bzw. Klebung) und Masse sehr gross ist. Je nach Wahl der schmelzbaren Substanz kann auch eine Temperaturunempfindlichkeit bis über 100°C erreicht werden. Seine Abschalteigenschaften sind durch Netzimpedanz und Netzabsicherung nicht beeinflusst.

Die geringen Abmessungen der gesamten Schutzeinrichtung von z.B. 20·20·10 mm erlauben den Einbau auch in kleine Elektrogeräte.

**Patentansprüche**

1. Schutzeinrichtung in aus einem Starkstromnetz betriebenen elektrischen Geräten, bestehend aus einer auf in das Gerätegehäuse (54) eindringende leitfähige Flüssigkeit ansprechenden elektronischen Schaltung und einem von dieser auslösbaren, in den Netzleitungen des Gerätes liegenden Schutzschalter (3, 4), mit den folgenden weiteren Merkmalen:

(a) eine Sonde an den Berandungen von Gehäuseöffnungen (42) und Gehäusefugen in Form eines bei der Handhabung des Gerätes nicht berührbaren offenen elektrischen Doppelleiters (44, 45; 46, 47), die bei eindringender Flüssigkeit ihren elektrischen Impedanzwert ändern,

(b) eine zwischen die Netzleitungen des Gerätes geschaltete Zündschaltung (13–22) mit einem Halbleiterschalter (17), an deren Eingang (7, 8) die Sonde liegt und die, wenn sich der Impedanzwert der Sonde um einen vorgegebenen Betrag ändert, den Halbleiterschalter (17) zündet, so dass an ihrem Ausgang ein Strom auftritt,

(c) ein in den Netzleitungen des Gerätes liegender selbstöffnender mechanischer Schutzschalter, dessen Kontakte (3, 3a, 4, 4a; 33, 34; 33, 34, 49, 50) geschlossen gehalten sind durch einen Werkstoff (10; 12), der durch mittelbares oder unmittelbares Erhitzen mittels des beim Zünden des Halbleiterschalters (17) auftretenden Stromes schmilzt.

2. Schutzeinrichtung nach Anspruch 1, gekennzeichnet durch ein Diodenquartett (13–16), das zwischen die vom Schutzschalter zur Last des Gerätes führenden Netzleitungen geschaltet ist und in dessen einer Diagonale ein dem Schutzschalter zugeordnetes Widerstandselement (10) in Reihe mit der Parallelschaltung eines Thyristors und eines Schutzkondensators (18) liegt, wobei der eine Eingang (7) des Doppelleiters der Sonde an der positiven Seite des Diodenquartetts und der andere Eingang (8) an der Zündelektrode des Thyristors liegt.

3. Schutzeinrichtung nach Anspruch 1, gekennzeichnet durch einen Schutzschalter mit mindestens einem Kontaktsatz (33, 34) mit vorgespannter Kontaktfeder (34) und einem Schmelzdraht (10), der den Kontaktsatz in geschlossener Stellung hält, und mit einem Kunststoffsockel (32; 48), auf dem die Teile befestigt sind und der die Anschlüsse für den Kontaktsatz und den Schmelzdraht trägt.

4. Schutzeinrichtung nach Anspruch 1, gekennzeichnet durch einen Schutzschalter mit zwei Kontaktsätzen mit vorgespannten Kontaktfedern (3, 4) und einem elektrischen Widerstandselement (10a; 10b), an das die Kontaktfedern bei geschlossenen Kontaktsätzen mittels eines schmelzbaren nicht leitenden Werkstoffs angeheftet sind, und mit einer Leiterplatte (60), auf der die Teile befestigt sind und die die Anschlüsse für die Kontaktsätze und das Widerstandselement trägt.

5. Schutzeinrichtung nach Anspruch 4, gekennzeichnet durch ein die Kontaktfedern (3, 4) an ihren freien Enden verbindendes isolierendes Joch (11), das an das Widerstandselement (10a; 10b) mittels eines schmelzbaren Klebers (12) angeklebt ist.

6. Schutzeinrichtung nach Anspruch 3 oder 4, dadurch gekennzeichnet, dass auf dem Kunststoffsockel (32; 48) bzw. der Leiterplatte (60) auch die Bauelemente (13–22) der Zündschaltung aufgebracht sind.

7. Schutzeinrichtung nach Anspruch 4 oder 5, dadurch gekennzeichnet, dass das Widerstandselement (10a) ein Drahtwiderstand mit einem Wickelkern aus Glasfasern und offenliegender einlagiger Drahtwicklung ist.

8. Schutzeinrichtung nach Anspruch 4 oder 5, dadurch gekennzeichnet, dass das Widerstandselement (10b) ein Dickfilmwiderstand ist.

9. Schutzeinrichtung nach einem der vorhergehenden Ansprüche, dadurch gekennzeichnet, dass die Zündschaltung im Netzstromkreis des Gerätes derart zwischen Schutzschalter und Last angeordnet ist, dass bei geöffnetem Schalter ihre sämtlichen Bauelemente (13–22) spannungsfrei geschaltet sind und dass die Zündschaltung zusammen mit dem Schutzschalter und der Netzzuleitung (23) eine untrennbare mechanische Einheit bildet.

## Claims

1. Protection device in electrical appliances supplied from conventional supply mains, consisting of an electronic circuitry responsive to conductive liquid entering into the device housing (54) and of a protective switch (3, 4) tripped by said electronic circuitry and being connected into the supply lines of the device, characterized by the following further features:

(a) a probe at the edges of housing openings (42) and housing joints in form of a twin conductor (44, 45; 46, 47) not being touchable during the operation of the device, the probe changing its electrical impedance value in the event of ingressing liquid,

(b) an ignition circuitry (13–22) with a solid-state switch (17), this circuitry being connected between the supply lines of the device and at the input (7, 8) of which the probe being placed, this circuitry igniting the solid-state switch (17), in case the impedance value of the probe is changed by a predetermined value, such that there is a current at its output,

(c) a self-opening mechanical protective switch being connected in the supply lines of the device, the contacts (3, 3a, 4, 4a; 33, 34; 33, 34, 49, 50) of said switch being held closed by a material (10; 12) melting by direct or indirect heating by means of the current occuring due to the ignition of the solid-state switch (17).

2. Protection device according to claim 1, characterized by a diode quartet (13–16) being connected between the supply lines running from the protective switch to the load of the device and in one diagonal of which a resistance element (10) associated to the protective switch is connected in series with the parallel connection of a thyristor and a protective capacitor (18), whereby the one input (7) of the twin conductor of the probe is connected to the positive side of the diode quartet and the other input (8) to the ignition electrode of the thyristor.

3. Protection device according to claim 1, characterized by a protective switch having at least one set of contacts (33, 34) with prestressed contact spring (34) and a wire link fuse element (10), holding the set of contacts in closed position, and having a plastic base (32; 48) to which parts are fastened and which carries the terminals for the set of contacts and for the wire link fuse element.

4. Protection device according to claim 1, characterized by a protective switch having two sets of contacts with pre-stressed contact springs (3, 4) and with an electrical resistance element (10a; 10b) to which the contact springs are attached for closed sets of contacts by means of a meltable non-conductive material, and with a printed-circuit board (60) to which parts are fastened and which carries the terminals for the sets of contacts and for the resistance element.

5. Protection device according to claim 4, characterized by an insulating yoke (11) connecting the contact springs (3, 4) at their free ends, this yoke being affixed to the resistance element (10a; 10b) by means of a meltable glue (12).

6. Protection device according to claim 3 or 4, characterized by that on the plastic base (32; 48) or on the printed-circuit board (60), also the components (13–22) of the ignition circuitry are placed.

7. Protection device according to claim 4 or 5, characterized by that the resistance element (10a) comprises a wire resistor with a winding core of glass-fibres and an open, one-layer wire winding.

8. Protection device according to claim 4 or 5, characterized by that the resistance element (10b) is a thick-film resistor.

9. Protection device according to one of the preceding claims, characterized by that the ignition circuitry in the supply-current circuit is arranged between the protective switch and the load such that, for an open switch, all its components (13–22) are free of voltage, and that the ignition circuitry forms a non-separable mechanical unit with the protective switch and the supply line cable (23).

**Revendications**

1. Dispositif de protection pour appareils électriques alimentés par un réseau de courant fort, se composant d'un circuit électronique réagissant à un liquide conducteur pénétrant dans le carter (54) de l'appareil et d'un interrupteur de protection (3, 4) déclenchable par celui-ci et branché dans les conducteurs d'alimentation-secteur de l'appareil, présentant les autres caractéristiques suivantes;

(a) une sonde placée sur les bords des orifices de carter (42) et des joints de carter sous la forme d'un double conducteur électrique (44, 45; 46, 47) ouvert, qui ne peut être touché lors de la manipulation de l'appareil, dont la valeur d'impédance électrique varie lors d'une pénétration de liquide;

(b) un circuit d'amorçage (13, 22) branché entre les conducteurs d'alimentation-secteur de l'appareil et comportant un interrupteur à semi-conducteur (17), à l'entrée duquel (7, 8) est placée la sonde et qui, lorsque la valeur d'impédance de la sonde varie d'une grandeur prédéterminée, amorce l'interrupteur à semi-conducteur (17) de manière qu'apparaisse un courant à sa sortie;

(c) un interrupteur mécanique de protection s'ouvrant automatiquement, branché dans les conducteurs d'alimentation-secteur de l'appareil et dont les contacts (3, 3a, 4, 4a; 33, 34; 33, 34, 49, 50) sont maintenus fermés par un matériau (10; 12) qui fond par chauffage direct ou indirect au moyen du courant apparaissant lors de l'amorçage de l'interrupteur à semi-conducteur (17).

2. Dispositif de protection selon la revendication 1, caractérisé par un quartet de diodes (13–16) qui est branché entre les conducteurs d'alimentation-secteur reliant l'interrupteur de protection à la charge de l'appareil et dans une diagonale duquel un élément résistant (10), associé à l'interrupteur de protection, est branché en série avec le montage en parallèle d'un thyristor et d'un condensateur de protection (18), une des entrées (7) du double conducteur de la sonde étant reliée au côté positif du quartet de diodes et l'autre entrée (8) étant reliée à l'électrode d'amorçage du thyristor.

3. Dispositif de protection selon la revendication 1, caractérisé par un interrupteur de protection comportant au moins un jeu de contacts (33, 34) avec un ressort de contact précontraint (34) et un fil fusible (10), qui maintient le jeu de contacts dans une position fermée, et avec un socle en matière plastique (32; 48), sur lequel les éléments sont fixés et qui porte les connexions pour le jeu de contacts et le fil fusible.

4. Dispositif de protection selon la revendication 1, caractérisé par un interrupteur de protection comportant deux jeux de contacts avec ressorts de contact précontraints (3, 4) et un élément résistant électrique (10a; 10b), sur lequel sont fixés les ressorts de contact, quand les jeux de contacts sont fermés, au moyen d'un matériau non conducteur fusible, et un circuit-plaque imprimé (60), sur lequel les éléments sont fixés et qui porte les connexions pour les jeux de contact et l'élément résistant.

5. Dispositif de protection selon la revendication 4, caractérisé par une culasse isolante (11) reliant les ressorts de contact (3, 4) à leurs extrémités libres et qui est collée sur l'élément résistant (10a; 10b) au moyen d'un adhésif fusible (12).

6. Dispositif de protection selon la revendication 3 ou 4, caractérisé en ce qu'également les composants (13, 22) du circuit d'amorçage sont placés sur le socle en matière plastique (32; 48) ou sur le circuit-plaque imprimé (60).

7. Dispositif de protection selon la revendication 4 ou 5, caractérisé en ce que l'élément résistant (10a) est une résistance filaire comportant un noyau d'enroulement constitué de fibres de verre et un enroulement filaire monocouche découvert.

8. Dispositif de protection selon la revendication 4 ou 5, caractérisé en ce que l'élément résistant (10b) est une résistance à film épais.

9. Dispositif de protection selon une des revendications précédentes, caractérisé en ce que le circuit d'amorçage est disposé dans le montage à courant du secteur de l'appareil, entre un interrupteur de protection et la charge, de telle sorte que, lorsque l'interrupteur est ouvert, tous ses composants (13–22) ne soient plus en tension et en ce que le circuit d'amorçage constitue avec l'interrupteur de protection et le conducteur d'alimentation-secteur (23) une unité mécanique inséparable.

Fig. 1

Fig. 2

Fig. 3

Fig. 4

Fig. 5

0 088 390

Fig. 6

Fig. 7

13